# EUROPEAN PATENT SPECIFICATION

(11) **EP 0 444 232 B1**
(45) Date of publication and mention of the grant of the patent: **05.06.1996**
(21) Application number: 90104102.0
(22) Date of filing: 02.03.1990
(51) Int. Cl.: C08F 14/06, C08F 2/18

(54) **Method for producing a vinyl chloride resin**
Methode zur Herstellung eines Vinylchloridharzes
Méthode de préparation d'une résine de chlorure de vinyle

(43) Date of publication of application: 04.09.1991
(73) Proprietor: MITSUBISHI CHEMICAL MKV COMPANY, Chiyoda-ku Tokyo (JP)
(72) Inventor: Takeuchi, Katsunori, Mitsubishi Kasei Vinyl Comp., Yokkaichi-shi, Mie-ken (JP)
(74) Representative: Wächtershäuser, Günter, Prof. Dr.

(56) References cited:
- DD-A- 145 168

## Description

The present invention relates to a method for producing a vinyl chloride resin. More particularly, it relates to a method for producing a vinyl chloride resin comprising spherical-shaped resin particles and having a large bulk specific gravity.

DD-A-145 168 describes a process for producing a vinyl chloride resin by a so-called fine suspension-polymerization. An aqueous solution of a mixture of an emulsifier such as alkyl phosphonate, an oil-soluble polymerization catalyst and vinyl chloride is finely dispersed by passing through a multiple-stage centrifugal pump several times. The polyvinyl chloride obtained by drying is a fine powder having a particle size within a range of 0.1 to 2 µm.

When a vinyl chloride resin or a copolymer resin of vinyl chloride as the main component with a co-monomer copolymerizable therewith (hereinafter referred to generally as a vinyl chloride resin), is extrusion-molded into e.g. a pipe, if the feeding rate of the vinyl chloride resin from a hopper to the extruder is increased in an attempt to improve the production efficiency by increasing the extruding amount, it may sometimes happen that the resin overflows from the gap (a feeding hole) between the hopper and the extruder due to the small bulk specific gravity of the resin, whereby it will be difficult to conduct a smooth operation. Therefore, it is required to improve the extrusion efficiency by increasing the bulk specific gravity of resin.

Heretofore, as a method of increasing the bulk specific gravity of a vinyl chloride resin in a usual suspension-polymerization, selection of a suspending agent has mainly been studied. For example, it has been proposed to employ a method wherein polyvinyl alcohols having different saponification degrees are employed in combination. However, no satisfactory results have yet been obtained.

It is an object of the present invention to obtain a vinyl chloride resin comprising spherical-shaped resin particles and having a large bulk specific gravity by a suspension-polymerization.

The present inventors have conducted extensive studies to overcome the above drawbacks of the conventional techniques and to obtain a vinyl chloride resin having a large bulk specific gravity by a method other than the method of selecting a suspending agent. As a result, it has been found possible to attain the object by conducting a suspension-polymerization under a certain specific condition. The present invention has been accomplished on the basis of this discovery.

The present invention provides a method for producing a vinyl chloride resin, which comprises suspension-polymerizing vinyl chloride, or a mixture of vinyl chloride with a co-monomer copolymerizable therewith, in an aqueous medium in the presence of an oil-soluble polymerization catalyst and a dispersant by means of a homogenizer in such a state that the organic phase is dispersed in the aqueous phase, as defined in claim 1.

Now, the present invention will be described in detail with reference to the preferred embodiments.

The monomer to be used for the method of the present invention includes, in addition to vinyl chloride alone, a mixture comprising vinyl chloride as the main component and a vinyl co-monomer copolymerizable therewith. Such a vinyl co-monomer includes, for example, an oil-soluble monomer such as vinyl acetate, styrene, acrylonitrile, an acrylic acid ester, a methacrylic acid ester or ethylene; a water-soluble monomer such as acrylic acid, methacrylic acid, maleic acid or crotonic acid; and an inorganic salt of a vinyl monomer such as sodium acrylate, sodium fumarate or calcium acrylate. Further, it may be a vinyl co-monomer having a polyfunctional group copolymerizable with vinyl chloride, such as divinylbenzene, diallyl phthalate or diallyl maleate. When such as vinyl co-monomer having a polyfunctional group is used, a vinyl chloride resin having a cross-linked structure, is obtainable.

As the polymerization catalyst in the method of the present invention, a well known oil-soluble polymerization initiator capable of generating free radicals, such as benzoyl peroxide, lauroyl peroxide or di-tert-butyl peroxide, is used.

As the dispersant, various polyvinyl alcohols obtainable by partially saponifying polyvinyl acetate, various water-soluble cellulose derivatives or suspension stabilizers such as gelatin, which are commonly employed, are used.

The feature of the present invention resides in that the above monomer is suspension-polymerized in the presence of the oil-soluble polymerization catalyst and the dispersant, in an aqueous medium by means of a homogenizer in such a state that the organic phase is dispersed in the aqueous phase.

The homogenizer is an apparatus for preparing a stabilized suspension by uniformly dispersing usually to a liquid other substances immiscible therewith, which is so designed that the mixture to be treated, is forcibly passed under pressure through a narrow space formed precisely by a rigid body, followed by releasing the pressure, whereby the mixture is formed into fine particles and uniformly dispersed by the liquid friction, the abrupt reduction in the pressure, the shearing and the collision due to the vigorous turbulent flow thereby created.

In the method of the present invention, the homogenizer is operated under a relatively low pressure at a level of from 1 to 70 kg/cm²G. It is particularly preferred to operate it under a pressure of from 10 to 50 kg/cm²G. For example, when the dispersion is conducted under a pressure of 30 kg/cm²G, it is possible to obtain a stable dispersion in which liquid particles of the organic phase having sizes of from 20 to 150 µm (an average particle size: 100 µm) are dispersed in the aqueous phase.

The dispersion thus obtained is reacted at a temperature of from 1 to 90°C, preferably from 30 to 70°C, in accordance with a usual suspension-polymerization method, whereby it is possible to obtain a vinyl chloride resin in the form of resin particles of spherical shape having a large bulk specific gravity, as shown by the Examples given hereinafter.

Now, the present invention will be described in further detail with reference to Examples and Comparative Example and Reference Examples. However, it should be understood that the present invention is by no means restricted by such specific Examples.

### EXAMPLES 1 TO 3

Into an autoclave equipped with a stirrer and having an internal capacity of 300 *ℓ*, 120 kg of water, 7.5 kg of a 4% polyvinyl alcohol aqueous solution and 600 g of lauroyl peroxide, were charged. After flushing air with nitrogen gas, 60 kg of vinyl chloride was added under stirring at a rotational speed of 100 rpm.

The dispersion thus obtained was supplied to a homogenizer (15M-8TA, manufactured by MANTON-GAULIN CO.) under an emulsifying pressure of 50 kg/cm²G (Example 1), 30 kg/cm²G (Example 2) or 10 kg/cm² (Example 3) for homogenizing treatment. Then, the mixture was supplied to an autoclave equipped with a stirrer, and the suspension-polymerization was conducted while stirring the mixture at 57°C. The reaction was continued until the pressure started to drop. After completion of the polymerization reaction, unreacted vinyl chloride monomer was removed, and the residue was dehydrated and dried to obtain a polyvinyl chloride resin of spherical shape.

The particle size and the bulk specific gravity of the polyvinyl chloride resin thus obtained, were measured. The results are shown in Table 1.

### COMPARATIVE EXAMPLE 1

Into an autoclave equipped with a stirrer and having an internal capacity of 300 ℓ, 120 kg of water, 7.5 kg of a 4% polyvinyl alcohol aqueous solution and 600 g of lauroyl peroxide were charged. After flushing air with nitrogen gas, 60 kg of vinyl chloride was added under stirring at a rotational speed of 100 rpm, and the suspension-polymerization was conducted under stirring at 57°C.

The polymerization reaction was terminated at the time when the internal pressure dropped to 7 kg/cm²G. Unreacted vinyl chloride monomer was removed, and the residue was dehydrated and dried to obtain a polyvinyl chloride resin of irregular shape.

The particle size and the bulk specific gravity of the polyvinyl chloride resin thus obtained, were measured. The results are shown in Table 1.

**Table 1**

| | | Vinyl chloride resin | | | | | | | |
|---|---|---|---|---|---|---|---|---|---|
| | Homogenizing pressure (kg/cm²) | Particle size (mesh) | | | | | | | Bulk specific gravity (g/cm³) |
| | | 42 on | 60 on | 80 on | 100 on | 150 on | 200 on | 200 pass | |
| Example 1 | 50 | 0 | 0 | 0 | 2 | 76 | 13 | 9 | 0.549 |
| Example 2 | 30 | 0 | 0 | 0 | 9 | 73 | 16 | 2 | 0.558 |
| Example 3 | 10 | 0 | 0 | 0 | 4 | 76 | 18 | 2 | 0.559 |
| Comparative Example 1 | - | 0 | 2 | 10 | 20 | 35 | 27 | 6 | 0.518 |

42 mesh ≙ 354 µm
60 mesh ≙ 250 µm
80 mesh ≙ 177 µm
200 mesh ≙ 74 µm
150 mesh ≙ 105 µm
100 mesh ≙ 149µm

### REFERENCE EXAMPLES 1 TO 4

To 100 parts by weight of the polyvinyl chloride resins obtained in each of Examples 1 to 3 and Comparative Example 1, 0.8 part by weight of tribasic lead sulfate, 2.3 parts by weight of lead stearate, 0.5 part by weight of dibasic lead stearate, 0.2 part by weight of calcium stearate and 0.1 part by weight of barium stearate were blended to obtain a compound. The bulk specific gravity and the falling speed of the compound thus obtained were measured. Further, it was examined whether or not the overflow phenomenon of the compound occurred. The results are shown in Table 2.

The falling speed and the occurrence or non-occurrence of the overflow phenomenon were measured or examined by the following methods:

### Falling speed:

To a funnel for measuring the bulk specific gravity according to JIS K 6721, 100 g of the compound is introduced, and the number of seconds taken for the falling is measured.

### Occurrence or non-occurrence of overflow phenomenon:

When a pipe is molded by a RC-100VII type twin-screw extruder (manufactured by Ikegai Tekkou), the feeding rate of the compound from the hopper to the extruder is increased in order to increase the extruding amount, whereupon it is visually determined wherther or not a phenomenon wherein the compound overflows from the gap (feeding hole), occurs.

**Table 2**

| | Resin used | Bulk specific gravity of compound (g/cm³) | Falling speed of compound (g/sec) | Overflow |
|---|---|---|---|---|
| Reference Example 1 | Example 1 | 0.581 | 7.8 | Not occurred |
| Reference Example 2 | Example 2 | 0.588 | 8.3 | Not occurred |
| Reference Example 3 | Example 3 | 0.589 | 8.4 | Not occurred |
| Reference Example 4 | Comparative Example 1 | 0.539 | 5.3 | Occurred |

As shown in Tables 1 and 2, the bulk specific gravities of the vinyl chloride resin and the compound obtained by the method of the present invention are large as compared with that obtained by a conventional method. Further, the falling speed of the compound of the present invention is high due to the spherical shape of the resin particles. Furthermore, the compound well flows into the extruder, and no overflow phenomenon is observed during the molding. Thus, the present invention is practically valuable.

## Claims

1. A method for producing a vinyl chloride resin, which comprises suspension-polymerizing vinyl chloride, or a mixture of vinyl chloride with a co-monomer copolymerizable therewith, in an aqueous medium in the presence of an oil-soluble polymerization catalyst and a dispersant by means of a homogenizer in such a state that the organic phase is dispersed in the aqueous phase, wherein the dispersant is a polyvinyl alcohol obtained by partial saponification of polyvinyl acetate, a water-soluble cellulose derivative or gelatin and wherein the homogenizer is operated under a pressure within a range of from 1 to 70 kg/cm²G.

2. The method according to Claim 1, wherein the co-monomer copolymerizable with vinyl chloride is vinyl acetate, styrene, acrylonitrile, an acrylic acid ester, a methacrylic acid ester, ethylene, acrylic acid, methacrylic acid, maleic acid, crotonic acid, sodium acrylate, sodium fumarate, calcium acrylate, divinylbenzene, diallyl phthalate or diallyl maleate.

3. The method according to Claim 1, wherein the polymerization catalyst is benzoyl peroxide, lauroyl peroxide or di-tert-butyl peroxide.

4. . The method according to Claim 1, wherein the suspension-polymerization is conducted at a temperature of from 1 to 90°C.

5. . The method according to Claim 1, wherein the vinyl chloride resin has a bulk specific gravity within a range of from 0.54 to 0.56.

## Patentansprüche

1. Verfahren zur Herstellung eines Vinylchloridharzes, umfassend die Suspensions-Polymerisation von Vinylchlorid oder einer Mischung von Vinylchlorid mit einem damit copolymerisierbaren Co-Monomeren in einem wässerigem Medium, in Gegenwart eines Öl-löslichen Polymerisationskatalysators und eines Dispergiermittel mittels eines Homogenisators in einem solchen Zustand, bei dem die organische Phase in der wässerigen Phase dispergiert ist, wobei das Dispergiermittel ein Polyvinylalkohol, erhalten durch partielle Verseifung von Polyvinylacetat, ein Wasser-lösliches Cellulosederivat oder Gelatine ist und wobei der Homogenisator unter einem Druck im Bereich von 1 bis 70 kg/cm²G betrieben wird.

2. Verfahren gemäß Anspruch 1, wobei das mit Vinylchlorid copolymerisierbare Co-Monomere Vinylacetat, Styrol, Acrylnitril, ein Acrylsäureester, ein Methycrylsäureester, Maleinsäure, Crotonsäure, Natriumacrylat, Natriumfumarat, Calciumacrylat, Divinylbenzol, Diallylphthalat oder Diallylmaleat ist.

3. Verfahren gemäß Anspruch 1, wobei der Polymerisationskatalysator Benzoylperoxid, Lauroylperoxid oder Di-tertiär-butylperoxid ist.

4. Verfahren gemäß Anspruch 1, wobei die Suspensions-Polymerisation bei einer Temperatur von 1 bis 90°C durchgeführt wird.

5. Verfahren gemäß Anspruch 1, wobei das Vinylchloridharz ein spezifisches Raumgewicht im Bereich von 0,54 bis 0,56 aufweist.

## Revendications

1. Procédé de production d'une résine de chlorure de vinyle, qui comprend la polymérisation en suspension de chlorure de vinyle, ou d'un mélange de chlorure de vinyle avec un comonomère polymérisable avec lui, dans un milieu aqueux en présence d'un catalyseur de polymérisation soluble dans les huiles et d'un dispersant à l'aide d'un homogénéiseur dans un état tel que la phase organique soit dispersée dans la phase aqueuse, dans lequel le dispersant est un alcool polyvinylique obtenu par saponification partielle de poly(acétate de vinyle), un dérivé de cellulose soluble dans l'eau ou de la gélatine et dans lequel l'homogénéiseur opère sous une pression de 1 à 70 kg/cm² au manomètre.

2. Procédé selon la revendication 1, dans lequel le comonomère copolymérisable avec le chlorure de vinyle est l'acétate de vinyle, le styrène, l'acrylonitrile, un ester d'acide acrylique, un ester d'acide méthacrylique, l'éthylène, l'acide acrylique, l'acide méthacrylique, l'acide maléique, l'acide crotonique, l'acrylate de sodium, le fumarate de sodium, l'acrylate de calcium, le divinylbenzène, le phtalate de diallyle et le maléate de diallyle.

3. Procédé selon la revendication 1, dans lequel le catalyseur de polymérisation est le peroxyde de benzoyle, le peroxyde de lauroyle ou le peroxyde de di-tert-butyle.

4. Procédé selon la revendication 1, dans lequel la polymérisation en suspension est réalisée à une température de 1 à 90°C.

5. Procédé selon la revendication 1, dans lequel la résine de chlorure de vinyle a une densité apparente de 0,54 à 0,56.
